# EUROPÄISCHE PATENTSCHRIFT

(11) **EP 1 553 653 B1**
(45) Veröffentlichungstag und Bekanntmachung des Hinweises auf die Patenterteilung: **06.10.2010**
(21) Anmeldenummer: 04030358.8
(22) Anmeldetag: 21.12.2004
(51) Int. Cl.: H01M 8/04

(54) **Brennstoffzellensystem**
Fuel cell
Pile à combustible

(30) Priorität: 22.12.2003 DE 10360458
(43) Veröffentlichungstag der Anmeldung: 13.07.2005
(73) Patentinhaber: J. Eberspächer GmbH & Co. KG, 73730 Esslingen (DE)
(72) Erfinder: Eberspach, Günter, 72649 Wolfschlugen (DE); Kaupert, Andreas, 89073 Ulm (DE); Reiners, Karsten, 89073 Ulm (DE)
(74) Vertreter: Ruttensperger, Bernhard

(56) Entgegenhaltungen:
- DE-A1- 10 016 847
- DE-A1- 10 205 573
- DE-A1- 19 948 216
- US-A- 4 650 727
- US-A- 5 617 995
- US-A1- 2002 081 473
- US-A1- 2002 092 287

## Beschreibung

Die vorliegende Erfindung betrifft ein Brennstoffzellensystem.

Brennstoffzellensysteme werden in Fahrzeugen häufig als so genannte Hilfsenergiequellen eingesetzt, durch welche elektrische Energie bereitgestellt wird, um die in Fahrzeugen vermehrt zu findenden Verbraucher elektrischer Energie ausreichend speisen zu können. Hier ist von Bedeutung, dass derartige Energieverbraucher häufig nicht nur dann zu betreiben sind, wenn auch ein beispielsweise als Brennkraftmaschine ausgebildetes Antriebsaggregat in Betrieb gesetzt ist und somit ebenfalls über eine Generatoranordnung zur Erzeugung elektrischer Energie genutzt werden kann. Beispielsweise kann es erforderlich sein, verschiedene Systeme zum Vorerwärmen eines Fahrzeugs bereits vor der Benutzungsaufnahme zu aktivieren, welche Systeme neben einer mit Brennstoff betriebenen Standheizung beispielsweise auch elektrisch zu betreibende Sitzheizungen, Außenspiegelheizungen, Scheibenheizungen sowie auch Fördereinrichtungen umfassen können, durch welche ein zu erwärmendes Medium, beispielsweise das Kühlwasser eines Antriebsaggregats oder die in den Fahrzeuginnenraum einzuleitende Luft, durch einen im Bereich einer Standheizung vorgesehenen Wärmetauscher hindurch gefördert werden.

Bei derartigen Systemen bestehen verschiedene Anforderungen. Zum einen soll in der Startphase möglichst schnell dafür gesorgt werden, dass die verschiedenen Systembereiche, insbesondere auch die Brennstoffzelle, möglichst schnell auf einer geeigneten Betriebstemperatur sind. Dies stellt sicher, dass das Gesamtsystem mit einem hohen Wirkungsrad arbeiten kann. Zum anderen sollen die zur Energieerzeugung genutzten Ausgangsstoffe, also beispielsweise ein in eine Brennstoffzelle einzuleitendes und Wasserstoff enthaltendes gasförmiges Medium, möglichst effizient ausgenutzt werden, um auch diesbezüglich den Wirkungsgrad zu erhöhen und selbstverständlich die Betriebskosten des Gesamtsystems zu senken.

Aus der US-A-4 650 727 ist ein Brennstoffzellensystem bekannt, bei welchem das einer Brennstoffzelle zuzuführende wasserstoffhaltige Gas in einem Reformer erzeugt wird. Das den Reformer verlassende wasserstoffhaltige Gas wird vor Eintritt in die Brennstoffzelle durch einen Wärmetauscher hindurchgeleitet, in welchem dem Reformer zugeführtes Wasser Wärme von dem wasserstoffhaltigen Gas übertragen wird. Dem Reformer ist ein mit Brennstoff oder Brennstoffzellen-Abgas betreibbarer Brenner zugeordnet, um durch Temperaturerhöhung den Reformierungsprozess zu unterstützen.

Es ist die Aufgabe der vorliegenden Erfindung, ein Brennstoffzellensystem vorzusehen, das in Kraftfahrzeugen eingesetzt werden kann und mit erhöhter Effizienz arbeiten kann.

Erfindungsgemäß wird diese Aufgabe gelöst durch ein Brennstoffzellensystem, umfassend eine Brennstoffzelle, einen Brenner, welcher wahlweise mit Brennstoff oder/und Brennstoffzellen-Abgas betreibbar ist, eine Wärmetauscheranordnung.zur Übertragung von im Brenner erzeugter Wärme auf in die Brennstoffzelle einzuspeisende Luft oder/und in die Brennstoffzelle einzuspeisendes wasserstoffhaltiges Gas.

Der bei dem efindungsgemäßen Brennstoffzellensystem vorgesehene Brenner kann durch seine Variabilität hinsichtlich des zur Verbrennung einzusetzenden Materials in verschiedenen Betriebsphasen aktiviert werden, um auf diese Art und Weise eine möglichst hohe Ausnutzung der im System vorhandenen Energie bzw. der zur Energieerzeugung genutzten Ausgangsstoffe zu ermöglichen. So kann in einer Startphase, in welcher die Brennstoffzelle selbst beispielsweise noch nicht zur Erzeugung elektrischer Energie genutzt werden kann, durch Betreiben des Brenners mit Brennstoff, also beispielsweise flüssigem Brennstoff oder ggf. auch gasförmigem Brennstoff, dafür gesorgt werden, dass durch Vorerwärmung der in dieser Phase die Brennstoffzelle durchströmenden Luft die Brenntsoffzelle selbst erwärmt wird und somit zum Verkürzen der Startphase vorkonditioniert wird. Ist die Brennstoffzelle in Betrieb gesetzt, so kann alternativ oder zusätzlich dann das die Brennstoffzelle verlassende Brennstoffzellen-Abgas, das immer noch einen deutlichen Anteil an nicht zur Elektrizitätserzeugung umgesetzten Wasserstoff enthält, in den Brenner eingeleitet werden und dort beispielsweise zusammen mit der die Brennstoffzelle ebenfalls verlassenden und bereits auch vorgewärmten Brennstoffzellen-Abluft verbrannt werden. Die dabei erzeugte Wärme kann wiederum auf die in die Brennstoffzelle einzuleitende Luft und ggf. auch auf das in die Brennstoffzelle einzuleitende wasserstoffhaltige gasförmige Medium übertragen werden, um eine verbesserte Betriebscharakteristik der Brennstoffzelle selbst erlangen zu können. Weiterhin ist es selbstverständlich möglich, die bei der Verbrennung in dem Brenner erzeugte Wärme, die nicht auf in die Brennstoffzelle einzuleitende Medien übertragen wird, in einer weiteren Wärmetauscheranordnung dazu zu nutzen, beispielsweise die in einen Fahrzeuginnenraum einzuleitende Luft zu erwärmen oder auch das im Kühlkreislauf einer Brennkraftmaschine vorhandene Kühlmedium zu erwärmen, um auf diese Art und Weise auch eine Vorkonditionierung im Bereich der Brennkraftmaschine erlangen zu können.

Bei dem erfindungsgemäßen System kann vorgesehen sein, dass der Brenner eine Brennkammer mit einer Zuführung für Brennstoff, einer Zuführung für Brennstoffzellen-Abgas und einer Zuführung für Verbrennungsluft umfasst. Dabei ist es dann weiter vorteilhaft, wenn die Zufuhr von Brennstoff und die Zufuhr von Brennstoffzellen-Abgas über eine gemeinsame Zuführleitung erfolgt, die den Brennstoff beziehungsweise das Brennstoffzellen-Abgas im Bodenbereich in Richtung Brennkammer einspeist.

Um den Aufbau des erfindungsgemäßen Systems möglichst einfach halten zu können, wird weiter vorgeschlagen, dass die Zufuhr von Brennstoff und die Zufuhr von Brennstoffzellen-Abgas über eine gemeinsame Zuführleitung erfolgt, die den Brennstoff beziehungsweise das Brennstoffzellen-Abgas im Bodenbereich in Richtung Brennkammer einspeist. Insbesondere dann, wenn als Brennstoff ein flüssiges Medium, also beispielsweise fossiler Brennstoff, wie Benzin oder Diesel oder Biodiesel, eingesetzt wird, kann es zum Trennen der Brennstoffeinleitungswege vorteilhaft sein, wenn die Zufuhr von Brennstoff und die Zufuhr von Brennstoffzellen-Abgas über separate Zuführleitungen erfolgt, die den Brennstoff beziehungsweise das Brennstoffzellen-Abgas im Bodenbereich in Richtung Brennkammer einspeisen.

Eine sehr gute Vermischung der in die Brennkammer einzuleitenden Verbrennungsluft mit dem ebenfalls in die Brennkammer einzuleitenden bzw. darin bereits vorhandenen Brennstoff bzw. Brennstoffzellen-Abgas kann dadurch erlangt werden, dass die Zufuhr von Brennstoff und die Zufuhr von Brennstoffzellen-Abgas über separate Zuführleitungen erfolgt, die den Brennstoff beziehungsweise das Brennstoffzellen-Abgas im Bodenbereich in Richtung Brennkammer einspeisen. Dabei kann die Effizienz der Verbrennung durch optimierte Vermischung noch verbessert werden, indem eine Vor-Mischkammer vorgesehen ist, in welcher wenigstens ein Teil des Brennstoffzellen-Abgases und wenigstens ein Teil der Verbrennungsluft vor Einspeisung in die Brennkammer vermischt werden.

Um insbesondere flüssigen Brennstoff in einen Zustand zu bringen, in welchem er mit der Verbrennungsluft ein zündfähiges bzw. verbrennbares Gemisch bildet, wird vorgeschlagen, dass wenigstens im Bodenbereich der Brennkammer ein poröses Verdampfermedium, vorzugsweise mit Heizeinrichtung, vorgesehen ist, über welches zumindest der Brennstoff in die Brennkammer eingespeist wird.

Bei einer alternativen Ausgestaltungsform wird vorgeschlagen, dass der Brenner eine Zerstäuberanordnung aufweist mit einer Zuführung für flüssigen Brennstoff, einer Zuführung für auch zur Brennstoffzerstäubung eingesetzter Verbrennungsluft und einer Zuführung für Brennstoffzellen-Abgas.

Dabei kann vorgesehen sein, dass die Zerstäuberanordnung einen Außen-Drallströmung-Raum und einen Innen-Drallströmung-Raum aufweist zum Erzeugen einer zu einer Zerstäuberlippe führenden Außen-Drallströmung und Innen-Drallströmung, und dass die Zuführung für Brennstoffzellen-Abgas eine Zuführleitung umfasst, durch welche das Brennstoffzellen-Abgas in den Bereich der Innen-Drallströmung oder/und der Außen-Drallströmung geleitet wird.

Bei einer baulich einfach zu realisierenden, gleichwohl jedoch eine effiziente Durchmischung bereitstellenden Ausgestaltungsform kann weiter vorgesehen sein, dass die Zuführleitung durch ein Strömungsführungselement hindurchführt, welches den Innen-Drallströmung-Raum begrenzt.

Die vorliegende Erfindung wird nachfolgend anhand der beiliegenden Zeichnungen anhand bevorzugter Ausgestaltungsformen detailliert beschrieben. Es zeigt:
- Fig. 1: eine Blockbild-Darstellung eines erfindungsgemäßen Brennstoffzellensystems;
- Fig. 2: eine Teil-Schnittdarstellung eines bei dem System der Fig. 1 einsetzbaren Brenners;
- Fig. 3: eine der Fig. 2 entsprechende Ansicht einer alternativen Ausgestaltungsform des Brenners;
- Fig. 4: eine weitere der Fig. 2 entsprechende Ansicht einer alternativen Ausgestaltungsform eines Brenners;
- Fig. 5: eine weitere der Fig. 2 entsprechende Ansicht einer alternativen Ausgestaltungsform eines Brenners;
- Fig. 6: eine weitere der Fig. 2 entsprechende Ansicht einer alternativen Ausgestaltungsform eines Brenners;
- Fig. 7: eine weitere der Fig. 2 entsprechende Ansicht einer alternativen Ausgestaltungsform eine Brenners;
- Fig. 8: eine vereinfachte Axialansicht des in Fig. 7 gezeigten Brenners;
- Fig. 9: eine Teil-Schnittansicht einer Zerstäuberanordnung für einen bei dem System der Fig. 1 einsetzbaren Brenner.

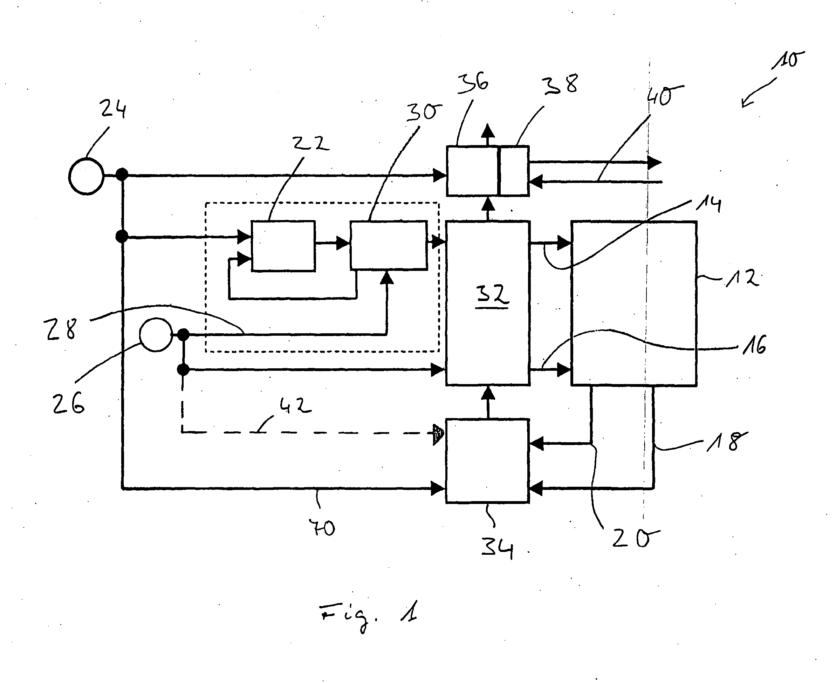

In Fig. 1 ist ein erfindungsgemäßes Brennstoffzellensystem allgemein mit 10 bezeichnet. Als wesentlichen Bestandteil weist dieses Brennstoffzellensystem 10 eine Brennstoffzelle 12 auf, in welche, wie durch einen Pfeil 14 angedeutet, ein wasserstoffhaltiges Gas eingeleitet wird, und, wie durch einen Pfeil 16 angedeutet, Luft, also Sauerstoff, eingeleitet wird. In der Brennstoffzelle 12 wird der in dem wasserstoffhaltigen Gas enthaltene Wasserstoff mit dem in der Luft enthaltenen Sauerstoff zur Erzeugung elektrischer Energie umgesetzt. Die Brennstoffzelle 12 verlässt dann, wie durch einen Pfeil 18 angedeutet, ein wasserstoffentreichertes Brennstoffzellen-Abgas und, wie durch einen Pfeil 20 angedeutet, eine sauerstoffentreicherte Brennstoffzellen-Abluft.

Das in die Brenntoffzelle 12 einzuspeisende wasserstoffhaltige Gas wird bei dem dargestellten Brennstoffzellensystem in einem Reformer 22 bereitgestellt. Dieser Reformer 22 wird von einer Brennstoffversorgung 24 mit Brennstoff, im Allgemeinen flüssigen Brennstoff, wie z.B. Benzin, Diesel oder sonstigen Kohlenwasserstoff, gespeist. Ferner wird dem Reformer 22 von einer Luftversorgung 26 Luft zugeführt, wobei diese Luft, wie durch einen Pfeil 28 angedeutet, vor Einspeisung in den Reformer 22 einen Wärmetauscher 30 durchströmt und dabei im Reformierungsbetrieb Wärme aufnehmen kann von dem den Reformer 22 verlassenden wasserstoffhaltigen Gas, im Allgemeinen auch Reformat genannt. Die Luft tritt somit bereits vorerwärmt in den Reformer 22 ein.

Es sei hier darauf hingewiesen, dass die Brennstoffversorgung 24 und die Luftversorgung 26 geeignete Förderorgane, wie z.B. Pumpen oder Gebläse, aufweisen, um die gewünschten Brennstoff- bzw. Luftströmungen erlangen zu können.

Das den Reformer 22 über den Wärmetauscher 30 verlassende wasserstoffhaltige Gas, also Reformat, strömt dann in Richtung Brennstoffzelle 12 und wird vor Einspeisung in diese durch einen weiteren Wärmetauscher 32 hindurchgeleitet . Auch die von der Luftversorgung 26, die nicht nur den Reformer 22, sondern auch die Brennstoffzelle 12 mit der zur Durchführung der gewünschten Reaktionen erforderlichen Luft speist, in Richtung Brennstoffzelle 12 zu fördernde Luft durchströmt diesen Wärmetauscher 32 und kann darin Wärme aufnehmen. Auf diese Art und Weise gelangt die in die Brennstoffzelle 12 einzuleitende Luft bereits in einem Zustand in diese Brennstoffzelle 12, in dem die Luft eine Temperatur aufweist, die geeignet ist, um die gewünschte Reaktion ablaufen zu lassen. Weiter kann durch Erwärmen dieser Luft in einer Phase in welcher die Brennstoffzelle 12 noch nicht betrieben wird, um elektrische Energie zu erzeugen, diese zum Vorkonditionieren, also Vorwärmen der Brennstoffzelle 12 genutzt werden.

Um die im Wärmetauscher 32 auf die Luft und ggf. das wasserstoffhaltige Gas zu übertragende Wärme bereitstellen zu können, ist dem Wärmetauscher 32 ein Brenner 34 vorgeschaltet. Dieser Brenner 34 ist dazu ausgebildet, verschiedene brennbare Medien mit Sauerstoff zu verbrennen, um die heißen Verbrennungsabgase dann in Richtung Wärmetauscher 32 zu leiten und dabei die angesprochenen gasförmigen Medien Luft und Reformat vorzuwärmen. Man erkennt in Fig. 1, dass dem Brenner 34 sowohl von der Brennstoffversorgung 24 in Form des von dieser gelieferten Brennstoffs, als auch von der Brennstoffzelle 12 in Form des Brennstoffzellen-Abgases ein brennbares Medium zugeführt werden kann. Weiter wird dem Brenner 34 die Brennstoffzellen-Abluft 20 zugeführt, welche noch Sauerstoff enthält, so dass zur Verbrennung im Brenner 34 nicht nur ein brennbares Medium, sondern auch der zur Oxidation erforderliche Sauerstoff bereitgestellt wird.

Auf den Wärmetauscher 32 folgt ein weiterer Brenner 36 mit einem diesem zugeordneten Wärmetauscher 38. Dem Brenner 36 kann von der Brennstoffversorgung 24 Brennstoff zugeführt werden. Ferner kann dem Brenner 36 über den Brenner 34 und den Wärmetauscher 32 das den Brenner 34 verlassende Abgas bzw. gasförmige Medium zugeführt werden, das, je nach Betriebszustand des Brenners 34, zumindest noch einen zur Verbrennung im Brenner 36 nutzbaren Sauerstoffanteil enthält. Dem Wärmetauscher 38 kann zur Wärmeaufnahme, wie durch einen Pfeil 40 angedeutet, ein zu erwärmendes Medium zugeführt werden. Dieses zu erwärmende Medium kann beispielsweise die in einen Fahrzeuginnenraum einzuleitende und vorher zu erwärmende Luft sein, kann selbstverständlich alternativ oder zusätzlich aber auch das Kühlmedium sein, das in einem Kühlkreislauf eines Antriebsaggregats zirkulieren kann.

Bevor nachfolgend verschiedene Ausgestaltungsformen des Brenners 34 detailliert erläutert werden, wird mit Bezug auf die Fig. 1 der Betrieb des erfindungsgemäßen Brennstoffzellensystems 10 beschrieben.

Es sei zunächst angenommen, dass ein mit einem derartigen System 10 ausgestattetes Fahrzeug noch nicht in Betrieb gesetzt ist, dass jedoch das Fahrzeug beispielsweise vorerwärmt bzw. vorkonditioniert werden soll. In dieser Phase sind die verschiedenen Systembereiche noch kalt. Es wird daher zunächst der Brenner 34 aktiviert, und zwar durch Zuführung von Brennstoff von der Brennstoffversorgung 24 und durch Zuführung von Verbrennungsluft von der Luftversorgung 26. Diese Verbrennungsluft strömt dann über den Wärmetauscher 32, durch die Brennstoffzelle 12 und als "Brennstoffzellen-Abluft" in den Brenner 34. Die im Brenner 34 erzeugten heißen Verbrennungsabgase werden in Richtung Wärmetauscher 32 geleitet. Dabei erwärmen sie die von der Luftversorgung 26 in Richtung Brennstoffzelle 12 und Brenner 34 geförderte Luft. Diese erwärmte Luft wiederum erwärmt die Brennstoffzelle 12 von innen und bereitet diese somit bereits für den Betrieb zur Erzeugung elektrischer Energie vor. Nach Durchströmen des Wärmetauschers 32 strömen die bereits etwas abgekühlten Verbrennungsabgase des Brenners 34 in Richtung Brenner 36. Soll in dieser Phase auch der Fahrzeuginnenraum vorerwärmt werden bzw. ggf. ein Antriebsaggregat vorerwärmt werden, so kann zusätzlich auch dem Brenner 36 von der Brennstoffversorgung 24 noch Brennstoff zugeführt werden, um den in den Verbrennungsabgasen des Brenners 34 noch enthaltenen Sauerstoff mit diesem Brennstoff zu verbrennen und die dabei entstehende Wärme im Wärmetauscher 38 dann auf das zu erwärmende Medium zu übertragen. Hierfür wird durch die Luftversorgung 26 so viel Sauerstoff in Richtung Brenner 34 gefördert, dass die diesen Brenner 34 verlassenden Abgase noch ausreichend Sauerstoff transportieren. Es ist somit nicht erforderlich, für den Brenner 36 eine zusätzliche Luftversorgungsleitung bereitzsutellen. Ist die Temperatur der den Wärmetauscher 32 verlassenden Abgase noch ausreichend hoch, um im Wärmetauscher 38 das zu erwärmende Medium auf die gewünschte Temperatur zu bringen, so wäre es in dieser Betriebsphase nicht erforderlich, zusätzlich auch noch den Brenner 36 zu aktivieren. Hier könnte grundsätzlich auch daran gedacht werden, bei entsprechender Dimensionierung des Brenners 34 bzw. des Wärmetauschers 38 auf den Brenner 36 vollständig zu verzichten und die in den Verbrennungsabgasen 34 auch nach dem Wärmetauscher 32 noch transportierte Wärme dann zu nutzen, um das zu erwärmende Medium auf die gewünschte Temperatur zu bringen.

Da in dieser Betriebsphase vor allem bei vergleichsweise niedrigen Außentemperaturen das Bordspannungssystem, in dieser Phase im Allgemeinen bereitgestellt durch eine Batterie, sehr stark belastet wird, ist es vorteilhaft, auch die Brennstoffzelle 12 zur Erzeugung elektrischer Energie zu betreiben bzw. in Betrieb zu setzen. Es wird daher auch der Reformer 22 aktiviert, und zwar durch Zufuhr von Kohlenwasserstoff und zur Reformierung erforderlicher Luft. Dabei kann auch der Reformer 22 vorerwärmt werden, um diesen sehr schnell auf die gewünschte Betriebstemperatur zu bringen. Diese Vorerwärmung könnte ggf. auch durch die den Brenner 34 verlassenden Verbrennungsabgase erfolgen, kann alternativ oder zusätzlich aber auch durch eine separate, beispielsweise elektrisch betreibbare Heizeinrichtung erfolgen.

Bei im Reformer 22 dann ablaufendem Reformierungsbetrieb wird ein Wasserstoff enthaltendes Gas erzeugt, das mit vergleichsweise hoher Temperatur in Richtung Wärmetauscher 30 strömt und dabei, wie bereits erwähnt, die in den Reformer 22 einzuspeisende Luft vorerwärmt. Das den Wärmetauscher 30 dann verlassende Reformat kann entweder direkt in Richtung Brennstoffzelle 12 geleitet werden oder, wie in Fig. 1 angedeutet, den Wärmetauscher 32 durchströmen und dabei noch etwas Wärme aufnehmen. Wird in die Brennstoffzelle 12 dann vorerwärmte Luft zusammen mit dem ebenfalls sehr warmen Reformat eingeleitet, kann in der Brennstoffzelle 12 die Umsetzung von in dem wasserstoffhaltigen Gas transportiertem Wasserstoff mit in der Luft enthaltenem Sauerstoff zu Wasser unter Erzeugung elektrischer Energie ablaufen. Diese elektrische Energie kann beispielsweise wieder genutzt werden, um in den verschiedenen Brennern 34, 36 bzw. auch im Reformer 22 ggf. vorhandene Heizeinrichtungen zu betreiben und ggf. auch andere in einem Fahrzeug in dieser Betriebsphase zu betreibende Verbraucher elektrischer Energie zu betreiben. Das ganze System belastet dann das Bordspannungssystem bzw. die darin vorhandene Batterie nicht weiter.

Ist die Brennstoffzelle 12 in Betrieb gesetzt bzw. wird vom Reformer 22 ein Wasserstoff enthaltendes Reformat in Richtung Brennstoffzelle 12 gespeist, so verlässt auch bei in Betrieb gesetzter Brennstoffzelle 12 diese ein Brennstoffzellen-Abgas, das noch Wasserstoff enthält. Da dieser Wasserstoff zusammen mit dem in der Brennstoffzellen-Abluft noch enthaltenen Sauerstoff im Brenner 34 verbrannt werden kann, ist es in dieser Phase dann nicht mehr erforderlich, den Brenner 34 mit Brennstoff von der Brennstoffversorgung 24 zu speisen.

Bei dem in Fig. 1 dargestellten und vorangehend beschriebenen System ist der thermische Haushalt im Wesentlichen beeinflusst durch die Menge der in Richtung Brennstoffzelle 12 von der Luftversorgung 26 geförderten Luft. Je größer die Luftmenge ist, desto mehr Sauerstoff steht auch bei betriebener Brennstoffzelle 12 im Brenner 34 zur Verfügung und steht dementsprechend auch mehr Sauerstoff im Brenner 36 zur Verfügung. Weiter hat die Zufuhr einer größeren Luftmenge zur Folge, das bei in Betrieb gesetzter Brennstoffzelle 12 von dieser ausreichend Wärme abgeführt werden kann, wobei durch Vorerwärmung der in die Brennstoffzelle 12 einzuleitenden Luft gleichzeitig dafür gesorgt ist, dass eine durch zu große Temperaturunterschiede auftretende Belastung der Brennstoffzelle 12 vermieden werden kann. Um das thermische Verhalten insbesondere der Brennstoffzelle weiter beeinflussen zu können, kann es erforderlich sein, wie durch eine gestrichelte Leitungsverbindung 42 angedeutet, in den Brenner 34 auch direkt Luft von der Luftversorgung 26 einzuspeisen. Diese Luft bzw. der darin enthaltene Sauerstoff wird nicht erforderlich sein, um im Brenner 34 die Verbrennung ablaufen zu lassen. Hierzu genügt der in der Brennstoffzellen-Abluft noch enthaltene Sauerstoff. Vielmehr hat diese Einspeisung zusätzlicher Luft zur Folge, dass sehr heiße Abgase des Brenners 34 etwas gekühlt werden, so dass die in die Brennstoffzelle 12 einzuspeisende und dazu vorher den Wärmetauscher 32 durchströmende Luft mit einer geeigneten Temperatur in die Brennstoffzelle 12 eintreten kann.

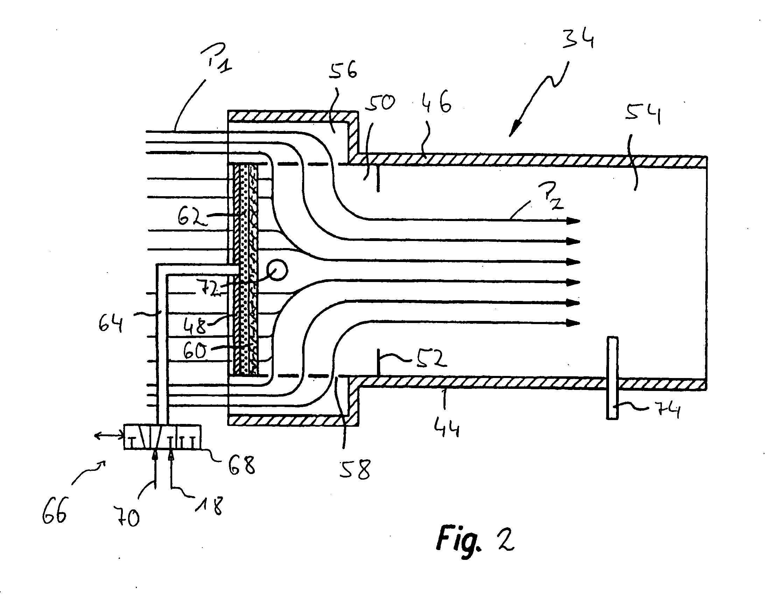

Nachfolgend werden verschiedene Ausgestaltungsformen des Brenners 34 bzw. Systemkomponenten dieses Brenners 34 detailliert beschrieben. Der in Fig. 2 gezeigte Brenner 34 umfasst ein allgemein mit 44 bezeichnetes Brennergehäuse mit einem Umfangswandungsbereich 46 und einem Bodenwandungsbereich 48. Der Umfangswandungsbereich 46 und der Bodenwandungsbereich 48 begrenzen eine Brennkammer 50 die über eine Flammblende oder einen Flammhalter 52 zu einem in Richtung Wärmetauscher 32 führenden Volumenbereich 54 offen ist. In seinem dem Bodenwandungsbereich 48 nahen Abschnitt ist der Umfangswandungsbereich 46 von einem ringartigen Raum 56 umgeben. Dieser ringartige Raum 46 steht über eine Mehrzahl von Öffnungen 58 in Verbindung mit der Brennkammer 50. Auf diese Art und Weise kann, wie durch Pfeile P₁ angedeutet, Verbrennungsluft von radial außen her in die Brennkammer 50 einströmen. Auch der Bodenwandungsbereich 48 kann mehrere derartige Öffnungen aufweisen, die in der Fig. 2 nicht dargestellt sind und durch welche hindurch zumindest ein Anteil der Verbrennungsluft in die Brennkammer 50 gelangen kann. Diese Verbrennungsluft wird, wie vorangehend mit Bezug auf die Fig. 1 bereits geschildert, im Wesentlichen in Form der Brennstoffzellen-Abluft (Pfeil 20 in Fig. 1) in Richtung Brenner 34 gespeist.

In Richtung Bodenwandungsbereich 48 ist die Brennkammer 50 begrenzt durch ein den Bodenwandungsbereich 48 im Wesentlichen vollständig überdeckendes poröses Verdampfermedium 60. Dieses poröse Verdampfermedium 60 kann ein Geflecht, ein Gewirk, Schaumkeramik oder ein sonstiges mit feinen Poren versehenes Material sein, in welchem flüssiger Brennstoff sich durch Kapillarwirkung verteilen kann. Zwischen dem porösen Verdampfermedium 60 und dem Bodenwandungsbereich 48 kann eine elektrisch betreibbare Heizeinrichtung 62 positioniert sein, um das poröse Verdampfermedium 60 zu erwärmen und dabei die Brennstoffabdampfung von darin sich verteilendem Brennstoff in Richtung Brennkammer 50 zu unterstützen.

In einem zentralen Bereich mündet in den Bodenwandungsbereich 48 bzw. die Brennkammer 50 eine Zuführleitung 64 ein. Über diese Zuführleitung 64 kann bei dieser Ausgestaltungsform sowohl der von der Brennstoffversorgung 24 zugeführte im Allgemeinen flüssige Brennstoff, als auch das Brennstoffzellen-Abgas, also ein noch Wasserstoff enthaltendes Gas, zugeführt werden. Um hier zwischen den verschiedenen Brennstoffen auswählen zu können, ist eine nur schematisch angedeutete Ventilanordnung 66 vorgesehen. Diese umfasst einen Ventilschieber 68, der je nach Positionierung in einer der drei möglichen Schaltstellungen entweder die von der Brennstoffzelle 12 her führende Leitung 18 mit der Zuführleitung 34 verbindet oder die von der Brennstoffversorgung 24 her führende Leitung 70 mit der Zuführleitung 64 verbindet oder keine dieser Leitungen 18, 70 mit der Zuführleitung 64 verbindet. Ist die Leitung 70 mit der Zuführleitung 64 verbunden, wird also flüssiger Brennstoff in das poröse Verdampfermedium 60 eingeleitet. Dieses verteilt sich unter Kapillarwirkung über das gesamte poröse Verdampfermedium und wird auch auf Grund der Heizwirkung der Heizeinrichtung 62 an der der Brennkammer 50 zugewandten Seite des porösen Verdampfermediums in Richtung Brennkammer 50 abdampfen. Dabei wird mit der ebenfalls in die Brennkammer 50 eingeleiteten Luft, also der Brennstoffzellen-Abluft, die je nach Betriebszustand der Brennstoffzelle 12 mehr oder weniger Sauerstoff enthält, ein zünd- bzw. verbrennungsfähiges Gemisch erzeugt. Um diese Verbrennung zu starten, ist ein Zündorgan 72, beispielsweise ein Glühzündstift, in geringem Abstand über dem porösen Verdampfermedium 60 angeordnet. Ist die Zündung erfolgt, strömen die heißen Verbrennungsabgase, wie durch Pfeile P₂ angedeutet, in Richtung Wärmetauscher 32 und umströmen dabei beispielsweise auch einen Temperatursensor 74, der somit durch Sensierung der Temperatur der die Brennkammer 50 verlassenden Gase erfassen kann, ob eine Zündung bereits erfolgt ist oder noch nicht.

Steht zur Verbrennung über die Leitung 18 wasserstoffhaltiges Gas zur Verfügung, wird das Ventil umgeschaltet und nunmehr die Leitung 18 mit der Zuführleitung 64 verbunden. Das wasserstoffhaltige Gas strömt dann durch diese Zuführleitung 64 und den Bodewandungsbereich 48 hindurch und tritt in dem lokalen Bereich, in dem die Zuführleitung 64 zu dem porösen Verdampfermedium 60 hin offen ist, in die Brennkammer 50 ein, wird sich dort mit der zur Verbrennung zur Verfügung stehenden Luft durchmischen und ebenfalls ein zündfähiges bzw. verbrennungsfähiges Gemisch erzeugen.

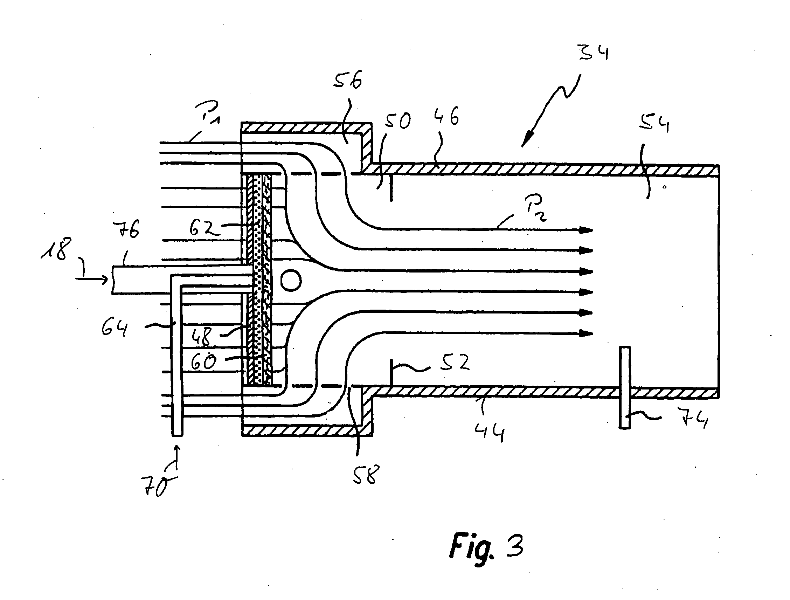

Eine Abwandlung eines derartigen Brenners ist in Fig. 3 gezeigt. Man erkennt hier, dass bei grundsätzlich gleichem Aufbau lediglich im Bereich der Zuführung der verschiedenen zur Verbrennung genutzten Medien ein Unterschied besteht. Es ist weiterhin die Zuführleitung 64 vorhanden, über welche nunmehr beispielsweise gespeist von der Leitung 70 flüssiger Brennstoff in das poröse Verdampfermedium 60 eingeleitet wird. Weiterhin ist eine die Zuführleitung 64 zumindest in dem den Bodenbereich 48 nahen Endabschnitt umgebende Zuführleitung 76 vorgesehen, die nunmehr in Verbindung mit der Leitung 18 steht und das wasserstoffhaltige Gas in Richtung Brennkammer 50 einspeisen kann. Da hier also getrennte Zufürleitungen 64 und 76 für den Brennstoff einerseits und das Brennstoffzellen-Abgas andererseits zur Verfügung stehen, kann auf einen Ventilmechanismus 66, wie er in Fig. 2 gezeigt ist, grundsätzlich verzichtet werden. Weiter ist es bei dieser Variante möglich, durch Bereitstellen einer separaten Zuführung für das Brennstoffzellen-Abgas dieses in optimierter Art und Weise, also ohne vom Ort der Zuführung des Brennstoffs über die Zuführleitung 64 abhängig zu sein, in die Brennkammer 50 einzuspeisen. So muss nicht notwendigerweise die in der Fig. 3 gezeigte koaxiale Einspeisung erfolgen. Vielmehr kann das Brennstoffzellen-Abgas über mehrere Einleitungspunkte verteilt am Bodenwandungsbereich 48 in Richtung Brennkammer 50 eingespeist werden. Auf diese Art und Weise kann eine verbesserte Vermischung des Brennstoffzellen-Abgases mit der Brennstoffzellen-Abluft bzw. der Verbrennungsluft erlangt werden.

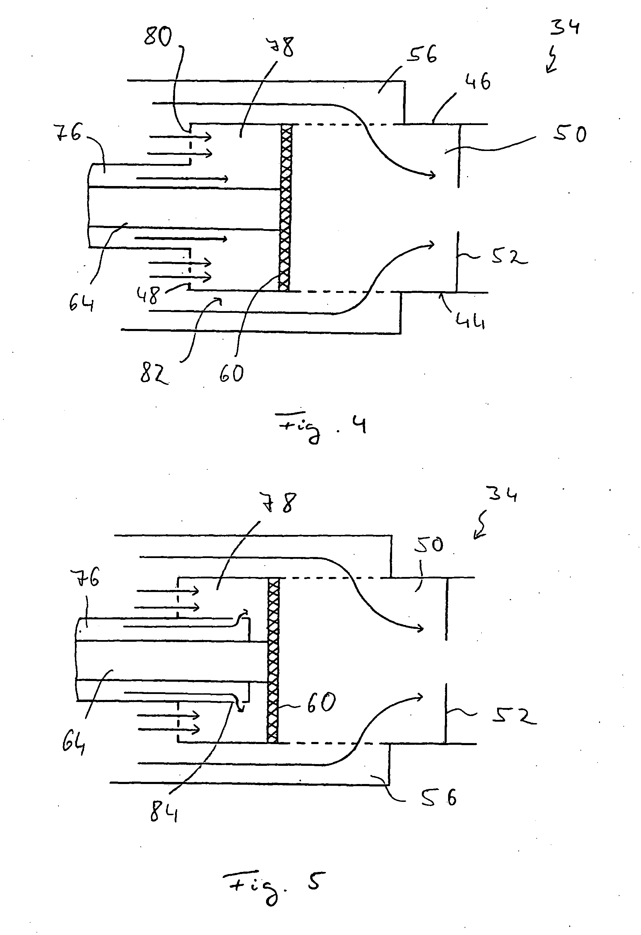

Eine Ausgestaltungsform, bei welcher eine derartige Vermischung noch weiter verbessert werden kann, ist in Fig. 4 gezeigt. Man erkennt hier, dass zwischen dem Bodenwandungsbereich 48 und dem porösen Verdampfermedium 60 ein Zwischenraum gebildet ist, der eine Vormischkammer 78 bereitstellt. In diese Vormischkammer 78 tritt zumindest ein Teil der zur Verbrennung genutzten Luft, also der Brennstoffzellen-Abluft, durch im Bodenwandungsbereich 48 vorgesehene Öffnungen 80 ein. Weiter ist die Zuführleitung 76 im Bereich ihrer Anbindung an das Gehäuse 44 zu dieser Vormischkammer 78 hin offen. Auf diese Art und Weise vermischt sich das Brennstoffzellen-Abgas mit der Brennstoffzellen-Abluft vor der Einspeisung in die Brennkammer 56 über das poröse Verdampfermedium 60 hinweg. Da in dieser Phase, in welcher das Brennstoffzellen-Abgas zur Verbrennung genutzt wird, kein flüssiger Brennstoff über die Zuführleitung 64 in das poröse Verdampfermeidum 64 eingespeist wird, sind dessen Poren auch nicht durch Flüssigkeit blockiert, so dass das in der Vormischkammer 78 in einem allgemein mit 82 bezeichneten Bodenbereich der Brennkammer 50 bzw. des Gehäuses 44 erzeugte Gemisch ohne größeren Widerstand in die Brennkammer 50 gelangen kann und dort verbrennen kann. Das poröse Verdmapfermedium 60 bildet in diesem Ausgestaltungsbeispiel bzw. in dieser Betriebsphase auch einen Flammhalter, der dafür sorgt, dass in der Vormischkammer 78 selbst noch keine Verbrennung stattfindet.

Eine Abwandlung dieser Ausgestaltungsform ist in Fig. 5 gezeigt. Man erkennt hier, dass die Zuführleitung 76 sich bis in den Bereich der Vormischkammer 78 hinein erstreckt und dort eine Mehrzahl von nach radial außen führenden Öffnungen 84 aufweist. Auch dies kann zu einer verbesserten Vermischung des Brennstoffzellen-Abgases mit der Brennstoffzellen-Abluft beitragen.

Es sei darauf hingewiesen, dass selbstverständlich auch bei den Ausgestaltungsvarianten der Figuren 4 und 5 dem porösen Verdamfpermedium 60 eine Heizeinrichtung zugeordnet sein kann, beispielsweise in Form einer Heizspirale oder Heizwendel, um bei Einspeisung eines flüssigen Brennstoffs über die Zuführleitung 64 die Abdampfung dieses flüssigen Brennstoffs in Richtung Brennkammer 50 zu verbessern.

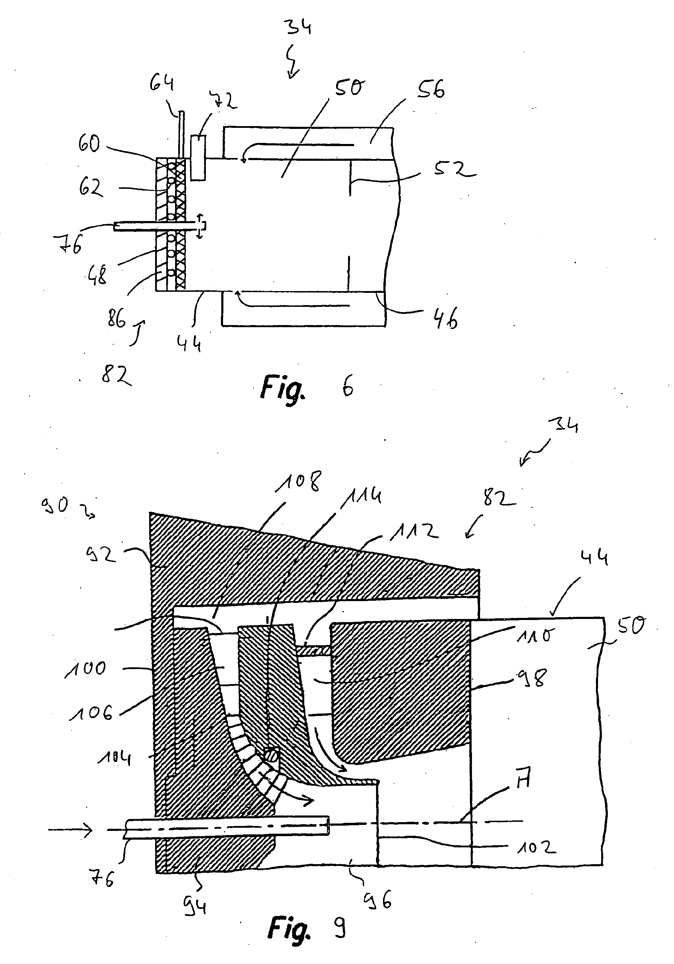

Eine weitere Ausgestaltungsform eines derartigen Brenners ist in Fig. 6 gezeigt.

Man erkennt auch hier das Gehäuse 44 mit dem Umfangswandungsbereich 46 und dem Bodenwandungsbereich 48. Angrenzend an diesen Bodenwandungsbereich 48 bzw. im Bodenbereich 82 ist eine Isoliermateriallage 86 vorgesehen, auf welche dann die Heizeinrichtung 62 sowie das poröse Verdampfermedium 60 folgen. Im zentralen Bereich dieses Bodenbereichs 82 verläuft nunmehr die Zuführleitung 76 für das Brennstoffzellen-Abgas. Diese Zuführleitung 76 erstreckt sich durch den Bodenwandungsbereich 48 und auch das poröse Verdampfermedium 60 hindurch und ist über eine oder mehrere Öffnungen dann zur Brennkammer 50 hin offen. Die Brennstoffzuführung erfolgt nunmehr über die radial herangeführte Zuführleitung 64. Der Vorteil dieser Ausgestaltungsform ist, dass die Zuführung des Brennstoffzellen-Abgases unbeeinträchtigt davon, ob im porösen Verdampfermedium 60 noch flüssiger Brennstoff enthalten ist und somit dessen Poren belegt, erfolgen kann. Auch dies gewährleistet eine leichtere Einleitung des Brennstoffzellen-Abgases im Bodenbereich 82 und somit eine verbesserte Durchmischung mit der wieder von radial außen her, ggf. aber auch durch Öffnungen im Bodenwandungsbereich 48 hindurch einzuleitenden Verbrennungsluft bzw. Brennstoffzellen-Abluft.

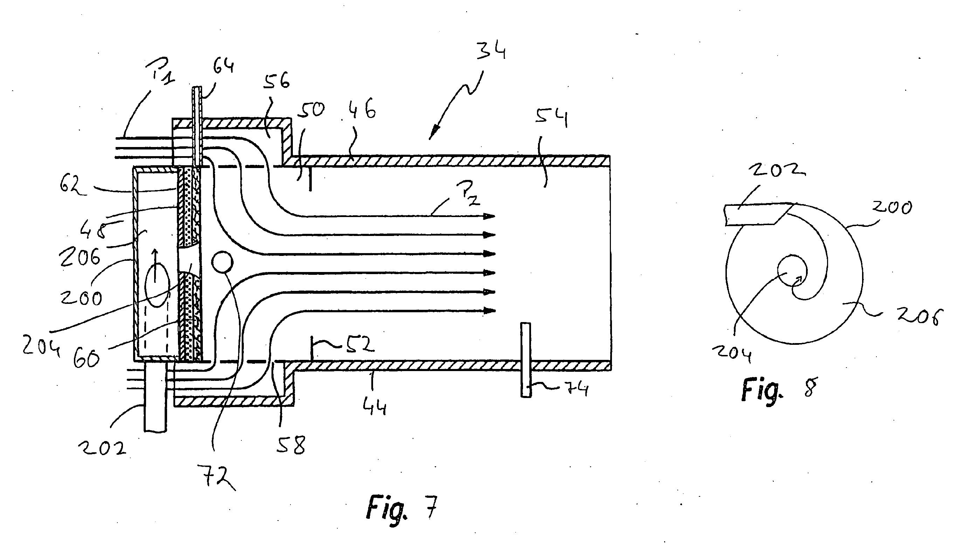

Eine weitere alternative Ausgestaltungsform ist in den Fig. 7 und 8 gezeigt. Man erkennt, dass der Aufbau grundsätzlich dem in Fig. 2 gezeigten Brenner entspricht. Die Zuführleitung 64 mündet nunmehr jedoch von radial außen in das poröse Verdampfermedium 60 bzw. führt Brennstoff von radial außen an dieses heran. Da, wie in Fig. 7 veranschaulicht, der Brennstoff von radial außen und vorzugsweise von oben zugeführt wird, kann dieser unter Ausnutzung der in nach unten drängenden Schwerkraft sehr gleichmäßig in dem porösen Verdampfermedium verteilt werden.

Der Bodenwandungsbereich 48 ist an seiner von der Brennkammer 50 abgewandt liegenden Seite durch ein Gehäuse 200 überdeckt. In dieses Gehäuse 200 mündet, wie in Fig. 8 veranschaulicht, im Wesentlichen tangential eine Gaszuführleitung 202 ein. Diese kann direkt oder ggf. über eine Ventilanordnung in Verbindung mit der in Fig. 1 erkennbaren Leitung 18 stehen, über welche das Anodenabgas, also ein noch Restwasserstoff enthaltendes Gas, zugeführt werden kann. Im Bodenwandungsbereich 48, der Heizeinrichtung 62 und dem porösen Verdampfermedium 60 sind in einem zentralen Bereich jeweils eine düsenartige Durchtrittsöffnung 204 bereitstellende Öffnungen vorgesehen. Diese düsenartige Durchtrittsöffnung 204 hat einen in Richtung Brennkammer sich erweiternden Querschnitt und bildet eine Dralldüse für das aus der Leitung 202 in das Gehäuse 200 tangential einströmende Gas. Bei dieser Einströmung des die Brennstoffzelle über die Leitung 18 verlassenden Gases über eine im Gehäuse 200 gebildete Drallkammer 206 und die düsenartige Öffnung 204 entsteht, wie in Fig. 8 angedeutet, eine drallartige Verwirbelung des in die Brennkammer 50 eingeleiteten Gases, wodurch eine außerordentlich gute Durchmischung beispielsweise mit der radial von außen eingeleiteten Verbrennungsluft erzeugt wird. Um ein Rückzünden der Flamme aus der Brennkammer 50 zu verhindern, kann im Bereich der Durchtrittsöffnung 204 bzw. auch im Bereich der Öffnung der Leitung 202 in die Kammer 206 eine Flammsperre, beispielsweise in Form eines Gitters oder einer sonstigen mit Öffnungen versehenen Struktur vorgesehen sein.

Der Zuführleitung 64 und auch der Gasleitung 202 können jeweils separat Ventilvorrichtungen zugeordnet sein, um diese Leitungen wahlweise abschließen zu können bzw. freigeben zu können und somit wahlweise das Brennstoffzellenabgas oder den Brennstoff in die Brennkammer 50 einleiten zu können.

Eine alternative Ausgestaltungsform eines bei dem System der Fig. 1 einzusetzenden Brenners 34 ist in Fig. 9 gezeigt. Während die vorangehend mit Bezug auf die Figuren 2 bis 8 beschriebenen Brenner bei Einsatz eines flüssigen Brennstoffs nach dem Prinzip eines Verdampferbrenners arbeiten, also das Gemisch aus Brennstoff und Verbrennungsluft durch Brennstoffverdampfung bereitgestellt wird, ist bei dem in Fig. 9 gezeigten Brenner 34 eine so genannte Zerstäuberanordnung 90 vorgesehen. Durch diese Zerstäuberanordnung 90 wird ein zunächst flüssiger Brennstoff in feinste Brennstoffpartikel zerstäubt und zusammen mit der Verbrennungsluft in die im Gehäuse 44 bereitgestellte Brennkammer 50 eingespeist. Diese Zerstäuberanordnung 90 bildet im Wesentlichen auch den Bodenbereich 82 der Brennkammer 50 bzw. des Gehäuses 44 aus.

Man erkennt in Fig. 9, dass diese Zerstäuberanordnung 90 einen allgemein mit 92 bezeichneten und im Wesentlichen topfartig ausgestalteten Düsenkörper umfasst. In diesen Düsenkörper 92 sind in axialer Staffelung - axial bezogen auf eine Längsachse des Brenners 34 - drei Einsatzteile 94, 96, 98 eingesetzt. Das Einsatzteil 94 ist dabei auf einem Boden 100 des Düsenkörpers 92 aufsitzend angeordnet und weist eine in Richtung der Achse A sich konkav verjüngende und vorzugsweise zu dieser Achse A rotationssymmetrische Formgebung auf.

Das zweite Einsatzteil 96 ist in Abstand vom ersten Einsatzteil 94 angeordnet und weist in seinem radial inneren Bereich einen in einer Zerstäuberlippe 102 endenden näherungsweise zylindrischen Abschnitt auf. Zwischen dem ersten Einsatzteil 94 und dem zweiten Einsatzteil 96 ist ein Innen-Drallströmung-Raum 104 gebildet, in dem mehrere Strömungsablenkelemente 106 dafür sorgen, dass die von einem radial äußeren ringartigen Raum 108 herangeführte Verbrennungsluft, also hier wieder die Brennstoffzellen-Abluft, beim Strömen von radial außen nach radial innen auch eine Umfangsströmungskomponente erhält und somit in Richtung Zerstäuberlippe 102 in Form einer mit Drall um die Achse A versehenen Strömung geleitet wird.

Axial folgend auf das zweite Einsatzteil 96 ist dann mit Abstand zu diesem das dritte Einsatzteil 98 angeordnet. Auch zwischen diesen beiden Einsatzteilen 96, 98 ist ein Zwischenraum vorgesehen, der einen Außen-Drallströmung-Raum 110 definiert. Auch hier sind mehrere Strömungsablenkelemente 112 vorgesehen. Diese sorgen dafür, dass die von radial außen heranströmende Luft ebenfalls eine Umfangsströmungskomponente enthält, so dass auch von der Außenseite her eine mit Drall versehene Strömung in Richtung Zerstäuberlippe 102 strömt.

In dem zweiten Einsatzteil 96 ist an seiner den Innen-Drallströmung-Raum 104 begrenzenden Seite eine nutartige Einsenkung 114 vorgesehen. In diese wird der zu zerstäubende flüssige Brennstoff eingeleitet und in Umfangsrichtung durch ein schematisch angedeutetes Brennstoffverteilungselement verteilt. Dieser Brennstoff gelangt somit auf den von der Innen-Drall-Strömung überströmten Oberflächenbereich des zweiten Einsatzteils 96 und wird unter der Förderwirkung der Innen-Drallströmung in Richtung Zerstäuberlippe 102 transportiert. Gelangt der zunächst noch flüssige und einen dünnen Belegungsfilm auf dem zweiten Einsatzteil 96 bildende Brennstoff dann zur Zerstäuberlippe 102 wird er durch die beiden dort aufeinander treffenden Drallströmungen in feinste Partikel zerlegt, die dann in der Brennkammer 50 mit der Verbrennungsluft verbrannt werden können.

Es sei hier darauf hingewiesen, dass der Aufbau einer derartigen Zerstäuberanordnung 90 aus der DE 102 05 573 A1 grundsätzlich bekannt ist. Es wird daher hinsichtlich der weiteren konstruktiven Details einer derartigen Zerstäuberanordnung 90 auf diese Druckschrift verwiesen, deren Inhalt hiermit durch Bezugnahme zum Offenbarungsgehalt aufgenommen wird.

Man erkennt in Fig. 9 weiter die Zuführleitung 76, die den Boden 100 des Düsenkörpers 92 und auch das erste Einsatzteil 94 durchsetzt und in denjenigen Volumenbereich ragt, der auch von dem zur Zerstäuberlippe 102 führenden im Wesentlichen zylindrischen Bereich des zweiten Einsatzteils 96 umgeben ist. Das über diese Zuführleitung 76 zugeführte Brennstoffzellen-Abgas tritt also in einem Volumenbereich aus der Zuführleitung 76 aus, in dem auch die Verbrennungsluft, hier in Form der Innen-Drallströmung strömt. Auf Grund des Dralls dieser Innen-Drallströmung wird unmittelbar nach dem Austritt aus der Zuführleitung 76 das Brennstoffzellen-Abgas sich mit dieser Innendrallströmung und kurz darauf auch mit der Außen-Drallströmung vermischt und in dieser Mischung dann zum Verbrennen die Brennkammer 50 eintreten.

Auch die Fig. 9 zeigt also einen Brenner 34, der wahlweise mit Brennstoff, also in diesem Falle vorzugsweise flüssigem Brennstoff, oder dem Brennstoffzellen-Abgas betrieben werden kann. Auch hier kann die Brennstoffzellen-Abluft dann als Verbrennungsluft genutzt werden und kann gleichzeitig dazu genutzt werden, bei Verwendung eines flüssigen Brennstoffs diesen zur Verbrennung zu zerstäuben.

Es sei darauf hingewiesen, dass bei allen vorangehend beschriebenen Brennern 34 in demjenigen Betriebszustand, in welchem beispielsweise das wasserstoffhaltige Brennstoffzellen-Abgas noch nicht zur Verfügung steht, nicht nur flüssiger Brennstoff zum Betrieb des Brenners 34 genutzt werden kann. Selbstverständlich kann bei entsprechender Ausgestaltung der Brennstoffzuführung 24 auch ein gasförmiger Brennstoff, wie z.B. Erdgas, als mit der Brennstoffzellen-Abluft zu verbrennender Ausgangsstoff eingesetzt werden.

## Patentansprüche

1. Brennstoffzellensystem, umfassend:
- eine Luftversorgung (26) zur Zufuhr von Luft,
- eine Brennstoffversorgung (24) zur Zufuhr von Kohlenwasserstoff-Brennstoff,
- einen Reformer (22), welcher vermittels der Luftversorgung (26) mit Luft gespeist wird und vermittels der Brennstoffversorgung (24) mit Kohlenwasserstoff-Brennstoff gespeist wird, wobei der Reformer (22) wasserstoffhaltiges Gas erzeugt,
- einen ersten Wärmetauscher (30),
- eine Brennstoffzelle (12), welche mit dem wasserstoffhaltigen Gas von dem Reformer (22) über die erste Wärmetauscheranordnung (30) gespeist wird, wobei die dem Reformer (22) zugeführte Luft den ersten Wärmetauscher (30) durchströmt zur Aufnahme von Wärme von dem wasserstoffhaltigen Gas in dem ersten Wärmetauscher (30),
- einen wahlweise mit Kohlenwasserstoff-Brennstoff und/oder wasserstoffentreichertem Brennstoffzellen-Abgas betreibbaren Brenner (34),
- einen zweiten Wärmetauscher (32) zur Übertragung von in dem Brenner (34) erzeugter Wärme auf in die Brennstoffzelle (12) einzuspeisende Luft oder/und in die Brennstoffzelle (12) einzuspeisendes wasserstoffhaltiges Gas, nachdem das wasserstoffhaltige Gas den ersten Wärmetauscher (30) durchströmt hat.

2. Brennstoffzellensystem nach Anspruch 1,
**dadurch gekennzeichnet, dass** der Brenner (34) eine Brennkammer (50) mit einer Zuführung für Brennstoff, einer Zuführung für Brennstoffzellen-Abgas und einer Zuführung für Verbrennungsluft umfasst.

3. Brennstoffzellensystem nach Anspruch 2,
**dadurch gekennzeichnet, dass** der Brennstoff und das Brennstoffzellen-Abgas in einem Bodenbereich (82) der Brennkammer (50) in diese eingespeist werden.

4. Brennstoffzellensystem nach Anspruch 3,
**dadurch gekennzeichnet, dass** die Zufuhr von Brennstoff und die Zufuhr von Brennstoffzellen-Abgas über eine gemeinsame Zuführleitung (64) erfolgt, die den Brennstoff beziehungsweise das Brennstoff-Abgas im Bodenbereich (82) in Richtung Brennkammer (50) einspeist.

5. Brennstoffzellensystem nach Anspruch 3,
**dadurch gekennzeichnet, dass** die Zufuhr von Brennstoff und die Zufuhr von Brennstoffzellen-Abgas über separate Zuführleitungen (64, 76) erfolgt, die den Brennstoff beziehungsweise das Brennstoffzellen-Abgas im Bodenbereich (82) in Richtung Brennkammer (50) einspeisen.

6. Brennstoffzellensystem nach einem der Ansprüche 2 bis 5,
**dadurch gekennzeichnet, dass** die Verbrennungsluft in einem Umfangsbereich (46) oder/und im Bodenbereich (82) in die Brennkammer (50) eingespeist wird.

7. Brennstoffzellensystem nach einem der Ansprüche 2 bis 6,
**dadurch gekennzeichnet, dass** eine Vor-Mischkammer (78) vorgesehen ist, in welcher wenigstens ein Teil des Brennstoffzellen-Abgases und wenigstens ein Teil der Verbrennungsluft vor Einspeisung in die Brennkammer (50) vermischt werden.

8. Brennstoffzellensystem nach einem der Ansprüche 2 bis 7,
**dadurch gekennzeichnet, dass** wenigstens im Bodenbereich (82) der Brennkammer (50) ein poröses Verdampfermedium (60), vorzugsweise mit Heizeinrichtung (62), vorgesehen ist, über welches zumindest der Brennstoff in die Brennkammer (50) eingespeist wird.

9. Brennstoffzellensystem nach Anspruch 1,
**dadurch gekennzeichnet, dass** der Brenner (34) eine Zerstäuberanordnung (90) aufweist mit einer Zuführung für flüssigen Brennstoff, einer Zuführung für auch zur Brennstoffzerstäubung eingesetzter Verbrennungsluft und einer Zuführung für Brennstoffzellen-Abgas.

10. Brennstoffzellensystem nach Anspruch 9,
**dadurch gekennzeichnet, dass** die Zerstäuberanordnung (90) einen Außen-Drallströmung-Raum (100) und einen Innen-Drallströmung-Raum (104) aufweist zum Erzeugen einer zu einer Zerstäuberlippe (102) führenden Außen-Drallströmung und Innen-Drallströmung, und dass die Zuführung für Brennstoffzellen-Abgas eine Zuführleitung (76) umfasst, durch welche das Brennstoffzellen-Abgas in den Bereich der Innen-Drallströmung oder/und der Außen-Drallströmung geleitet wird.

11. Brennstoffzellensystem nach Anspruch 10,
**dadurch gekennzeichnet, dass** die Zuführleitung (76) durch ein Strömungsführungselement (94) hindurchführt, welches den Innen-Drallströmung-Raum (104) begrenzt.

## Claims

1. Fuel cell system, comprising:
- an air supply (26) for supplying air,
- a combustion supply (24) for supplying hydrocarbon-containing fuel,
- a reformer (22) to which air is supplied via the air supply (26) and to which hydrocarbon-containing fuel is supplied via the fuel supply (24), the reformer (22) generating hydrogen-containing gas,
- a first heat exchanger (30)
- a fuel cell (12) into which the hydrogen-containing gas is fed by the reformer (22) via the first heat exchanger arrangement (30), the air supplied to the reformer (22) flowing through the first heat exchanger (30) for receiving heat from the hydrogen-containing gas in the first heat exchanger (30),
- a burner (34) which can be operated with hydrocarbon fuel and/or with hydrogen-depleted fuel cell waste gas as desired,
- a second heat exchanger (32) for transferring heat generated in said burner (34) to air to be fed into the fuel cell (12) or/and to hydrogen-containing gas to be fed into the fuel cell (12), after the hydrogen-containing gas has flown through the first heat exchanger (30).

2. Fuel cell system in accordance with claim 1,
**characterized in that** said burner (34) comprises a combustion chamber (50) with a feed line for fuel, a feed line for fuel cell waste gas and a feed line for combustion air.

3. Fuel cell system in accordance with claim 2,
**characterized in that** the fuel and the fuel cell waste gas are fed into the combustion chamber (50) in a bottom area (82) of the combustion chamber (50).

4. Fuel cell system in accordance with claim 3,
**characterized in that** the fuel and the fuel cell waste gas are fed via a common feed line (64), which feeds the fuel and the fuel cell waste gas, respectively, in the bottom area (82) in the direction of the combustion chamber (50).

5. Fuel cell system in accordance with claim 3,
**characterized in that** the fuel and the fuel cell waste gas are fed via said separate feed lines (64, 76), which feed the fuel and the fuel cell waste gas, respectively, in the bottom area (82) in the direction of the combustion chamber (50).

6. Fuel cell system in accordance with one of claims 2 to 5,
**characterized in that** the combustion air is fed into the combustion chamber (50) in a circumferential area (46) or/and in the bottom area (82).

7. Fuel cell system in accordance with one of claims 2 to 6,
**characterized in that** a premixing chamber (78) is provided, in which at least part of the fuel cell waste gas and at least part of the combustion air are mixed before being fed into the combustion chamber (50).

8. Fuel cell system in accordance with one of claims 2 to 7,
**characterized in that** a porous evaporator medium (60), preferably with a heating means (62), via which at least the fuel is fed into the combustion chamber (50), is provided at least in the bottom area (82) of the combustion chamber (50).

9. Fuel cell system in accordance with claim 1,
**characterized in that** the burner (34) comprises an atomizer arrangement (90) with a feed line for liquid fuel, a feed line for combustion air, which is also fed in to atomize the fuel and with a feed line for fuel cell waste gas.

10. Fuel cell system in accordance with claim 9,
**characterized in that** the atomizer arrangement (90) comprises an outer swirl flow space (100) and an inner swirl flow space (104) to generate an outer swirl flow and an inner swirl flow leading to a said atomizer lip (102), and that the feed means for fuel cell waste gas comprises a feed line (76), through which the fuel cell waste gas is sent into the area of the inner swirl flow or/and the outer swirl flow.

11. Fuel cell system in accordance with claim 10,
**characterized in that** the feed line (76) passes through a flow guide element (94), which defines the said inner swirl flow space (104).

## Revendications

1. Système de pile à combustible, comprenant:
- une ventilation (26) pour amener de l'air,
- un système d'amenée de combustible (24) pour amener du combustible comprenant de l'hydrocarbure,
- un réformateur (22) auquel de l'air est amené par la ventilation (26) et auquel du combustible comprenant de l'hydrocarbure est amené par le système d'amenée de combustible (24), le réformateur (22) produisant du gas contenant de l'hydrogène,
- un premier échangeur de chaleur (30)
- une pile à combustible (12) dans laquelle le gaz contenant de l'hydrogène est inséré par le réformateur (22) par le premier arrangement d'échangeur de chaleur (30), l'air amené au réformateur (22) circulant à travers le premier échangeur de chaleur (30) pour recevoir de la chaleur du gaz contenant de l'hydrogène dans le premier échangeur de chaleur (30),
- un brûleur (34) qui peut être opéré avec du combustible contenant des hydrocarbures et/ou avec les gaz d'échappement de la pile à combustible sans hydrogène,
- un deuxième échangeur de chaleur (32) pour transférer la chaleur produite dans le brûleur (34) à l'air qui est à insérer dans la pile à combustible (12) ou/et à un gaz contenant de l'hydrogène qui est à insérer dans la pile à combustible (12) après que le gaz contenant de l'hydrogène a circulé à travers le premier échangeur de chaleur (30).

2. Système de pile à combustible selon la revendication 1,
**caractérisé par** le brûleur (34) comprenant une chambre de combustion (50) avec une amenée pour le combustible, une amenée pour le gaz d'échappement de la pile à combustible et une amenée pour l'air de combustion.

3. Système de pile à combustible selon la revendication 2,
**caractérisé par** le combustible et le gaz d'échappement de la pile à combustible étant insérés dans la chambre de combustion (50) dans une partie de fond (82) de la chambre de combustion (50).

4. Système de pile à combustible selon la revendication 3,
**caractérisé par** le combustible et le gaz d'échappement de la pile à combustible étant insérés par une amenée commune (64), insérant respectivement le combustible et le gaz d'échappement de la pile à combustible dans la partie de fond (82) dans la direction de la chambre de combustion (50).

5. Système de pile à combustible selon la revendication 3,
**caractérisé par** le combustible et le gaz d'échappement de la pile à combustible étant insérés par des amenées séparées (64, 76), insérant respectivement le combustible et le gaz d'échappement de la pile à combustible dans la partie de fond (82) dans la direction de la chambre de combustion (50).

6. Système de pile à combustible selon une des revendications 2 à 5,
**caractérisé par** l'air de combustion étant inséré dans la chambre de combustion (50) dans une partie circonférentielle (46) ou/et dans la partie de fond (82).

7. Système de pile à combustible selon une des revendications 2 à 6,
**caractérisé par** une chambre de prémélange (78) étant prévue, dans laquelle au moins une part du gaz d'échappement de la pile à combustible et au moins une part de l'air de combustion sont mélangées avant d'être insérées dans la chambre de combustion (50).

8. Système de pile à combustible selon une des revendications 2 à 7,
**caractérisé par** un médium d'évaporateur poreux (60), de préférence avec dispositif de chauffage (62), étant prévu au moins dans la partie de fond (82) de la chambre de combustion (50) par lequel au moins le combustible est inséré dans la chambre de combustion (50).

9. Système de pile à combustible selon la revendication 1,
**caractérisé par** le brûleur (34) comprenant un arrangement de vaporisateur (90) avec une amenée pour du combustible liquide, une amenée pour de l'air de combustion utilisé aussi pour la vaporisation du combustible, et une amenée pour le gaz d'échappement de la pile à combustible.

10. Système de pile à combustible selon la revendication 9,
**caractérisé par** l'arrangement de vaporisateur (90) comprenant un espace de flux fluidisé extérieur (100) et un espace de flux fluidisé intérieur (104) pour produire un flux fluidisé extérieur et un flux fluidisé intérieur menant à une lèvre de vaporisation (102), et par le moyen d'insertion pour le gaz d'échappement de la pile à combustible comprenant une amenée (76) par laquelle le gaz d'échappement de la pile à combustible est guidé dans la région du flux fluidisé intérieur ou/et du flux fluidisé extérieur.

11. Système de pile à combustible selon la revendication 10,
**caractérisé par** le conduit d'amenée (76) passant à travers un élément de guidage de flux (94) définissant l'espace de flux fuidisé intérieur (104).
